# EUROPÄISCHE PATENTANMELDUNG

(11) **EP 3 892 414 A1**
(43) Veröffentlichungstag der Anmeldung: **13.10.2021**
(21) Anmeldenummer: 20168254.9
(22) Anmeldetag: 06.04.2020
(51) Int. Cl.: B23K 26/08

(54) **LASERBEARBEITUNGSMASCHINE**

(71) Anmelder: Bystronic Laser AG, 3362 Niederönz (CH)
(72) Erfinder: Bürgi, Fabian, 3185 Schmitten (CH); Bergamin, Marco, 8712 Stäfa (CH); Kähr, Christian, 5034 Suhr (CH)
(74) Vertreter: Fink Numrich Patentanwälte PartmbB

(57) **Zusammenfassung**

Die Erfindung betrifft eine Laserbearbeitungsmaschine, insbesondere Laserschneidmaschine (100), umfassend eine an einer Brücke (10) geführte Bearbeitungseinrichtung (1) mit einem verfahrbaren Wagen (2), auf dem eine Bearbeitungseinheit (3) angeordnet ist, die einen Bearbeitungskopf (4) aufweist, welcher derart ausgestaltet ist, dass er einen Laserstrahl aus Laserlicht auf ein zu bearbeitendes Werkstück richtet, wobei an dem Bearbeitungskopf (4) ein flexibles Faserkabel (6) zur Zuführung des Laserlichts von einer Laserlichtquelle (16) angeschlossen ist und die Bearbeitungseinheit (3) zusammen mit dem Bearbeitungskopf (4) relativ zu dem verfahrbaren Wagen (2) linear bewegbar ist. Das Faserkabel (6) ist an der Bearbeitungseinheit (3) mit einem ersten Fixiermittel (7) und an dem verfahrbaren Wagen (2) mit einem zweiten Fixiermittel (8) fixiert, wobei das Faserkabel (6) zum Ermöglichen einer linearen Bewegung der Bearbeitungseinheit (3) relativ zum verfahrbaren Wagen (2) in einer zwischen dem ersten und zweiten Fixiermittel (7, 8) vorgegebenen Führungsebene (G) frei beweglich ist.

## Beschreibung

Laserbearbeitungsmaschinen werden dazu verwendet, mit Hilfe von hochenergetischem Laserlicht Werkstücke zu bearbeiten, wie z.B. Bleche zu schneiden. Hierzu ist eine Bearbeitungseinheit vorgesehen, die auf einem verfahrbaren Wagen angebracht ist und welche einen Bearbeitungskopf aufweist, der aus Laserlicht einen Laserstrahl zur Bearbeitung des Werkstücks generiert. Die Bearbeitungseinheit ist zur Positionsveränderung des Bearbeitungskopfs relativ zum verfahrbaren Wagen bewegbar.

Das Laserlicht wird dem Bearbeitungskopf einer Laserbearbeitungsmaschine in der Regel über ein Faserkabel zugeführt. Das Faserkabel ist am Bearbeitungskopf angeschlossen und wird von dort unter Verwendung von an sich bekannten Energieketten, die auch andere Betriebsleitungen für die Maschine führen, zu einer Laserlichtquelle geleitet, welche das Laserlicht in das Faserkabel einstrahlt.

Die Druckschrift WO 2015/086724 A1 zeigt eine Laserbearbeitungsmaschine gemäß dem Oberbegriff des Anspruchs 1. In dieser Maschine wird das Faserkabel von einem verfahrbaren Querwagen zu einer Bearbeitungseinheit mit einem Laserkopf über eine Energiekette geführt, die sich oberhalb des Querwagens in vertikaler Richtung erstreckt und eine Umlenkung des Faserkabels um 180° bewirkt. Da ein Faserkabel im Vergleich zu anderen Leitungen der Laserbearbeitungsmaschine einen großen minimalen Biegeradius aufweist, hat die Energiekette auch einen großen Biegeradius und hierdurch eine große vertikale und horizontale Erstreckung, was die Laserbearbeitungsmaschine vergrößert. Ferner wird die Länge des Faserkabels aufgrund des großen Biegeradius der Energiekette vergrößert. Da die Länge des Faserkabels für die Führung von Laserlicht mit hohen Leistungen beschränkt ist, führt dies zu einer geringeren Flexibilität bei der Anordnung der Faserkabels in der Laserbearbeitungsmaschine respektive geringere Flexibilität der Laserquelle außerhalb der Bearbeitungsmaschine.

In der Druckschrift US 2010/0147810 A1 ist eine Laserschneidmaschine gezeigt, bei der einem verfahrbaren Schneidkopf Laserlicht über ein Faserkabel zugeführt, das mittels einer Energiekette umgelenkt wird, der in horizontaler Richtung verläuft.

Aufgabe der Erfindung ist es, eine verbesserte Laserbearbeitungsmaschine sowie eine entsprechende verbesserte Bearbeitungseinrichtung zu schaffen, die eine einfache und raumsparende Führung des Faserkabels hin zum Bearbeitungskopf ermöglichen.

Diese Aufgabe wird durch die Laserbearbeitungsmaschine gemäß Patentanspruch 1 bzw. die Bearbeitungseinrichtung gemäß Patentanspruch 13 gelöst. Weiterbildungen der Erfindung sind in den abhängigen Ansprüchen definiert.

Die erfindungsgemäße Laserbearbeitungsmaschine enthält eine Bearbeitungseinrichtung mit einem verfahrbaren Wagen, auf dem eine Bearbeitungseinheit angeordnet ist, die einen Bearbeitungskopf aufweist. Der Bearbeitungskopf ist derart ausgestaltet, dass er im Betrieb der Laserbearbeitungsmaschine einen Laserstrahl aus Laserlicht auf ein zu bearbeitendes Werkstück richtet. Vorzugsweise ist die Laserbearbeitungsmaschine eine Laserschneidmaschine zum Schneiden von Werkstücken und insbesondere Blechen oder rohrförmigen Körpern aus Metall. In diesem Fall handelt es sich bei dem Bearbeitungskopf um einen Schneidkopf, dessen Laserstrahl das entsprechende Werkstück zerschneidet.

In der erfindungsgemäßen Laserbearbeitungsmaschine ist an dem Bearbeitungskopf der Bearbeitungseinheit ein flexibles Faserkabel angeschlossen, um das Laserlicht von einer Laserlichtquelle zuzuführen. Die Bearbeitungseinheit ist dabei zusammen mit dem Bearbeitungskopf relativ zu dem verfahrbaren Wagen linear und vorzugsweise in vertikaler Richtung bewegbar. Beispielsweise wird in dem Faserkabel Laserlicht von einem Hochleistungsfaserlaser mit einer Leistung im Bereich von 2 kW bis 20 kW geführt. Der Innendurchmesser des Faserkabels liegt vorzugsweise im Bereich von 100 µm. Bei dem in der Faser geführten Laserlicht handelt es sich in einer Ausführungsform um kurzwelliges nicht-sichtbares Laserlicht.

Die erfindungsgemäße Laserbearbeitungsmaschine zeichnet sich dadurch aus, dass das Faserkabel an der Bearbeitungseinheit mit einem ersten Fixiermittel und an dem verfahrbaren Wagen mit einem zweiten Fixiermittel fixiert ist, wobei das Faserkabel zum Ermöglichen einer linearen Bewegung der Bearbeitungseinheit relativ zum verfahrbaren Wagen in einer zwischen dem ersten und zweiten Fixiermittel vorgegebenen Führungsebene frei beweglich ist. Es sind somit keine weiteren Fixiermittel zur starren Befestigung des Faserkabels zwischen dem ersten und dem zweiten Fixiermittel vorgesehen.

Die erfindungsgemäße Laserbearbeitungsmaschine weist den Vorteil auf, dass eine einfache und platzsparende Führung des Faserkabels zwischen dem verfahrbaren Wagen und der Bearbeitungseinheit durch die freie Bewegbarkeit des Faserkabels zwischen entsprechenden Fixierungen in einer Führungsebene erreicht wird. Im Besonderen kann die Länge des Faserkabels verkürzt werden und die Flexibilität bei der Anordnung des Faserkabels und entsprechend der Laserquelle erhöht werden.

In einer bevorzugten Ausführungsform ist das Faserkabel in der vorgegebenen Führungsebene mit einer maximalen Umlenkung von 179° zwischen dem ersten und zweiten Fixiermittel geführt. Der Begriff der maximalen Umlenkung um 179° ist derart zu verstehen, dass sich die Erstreckungsrichtung des Faserkabels ausgehend von jedem beliebigen Punkt des Faserkabels zwischen dem ersten und zweiten Fixiermittel (einschließlich dieser Fixiermittel) entlang des Wegs des Faserkabels zu jedem beliebigen anderen Punkt zwischen dem ersten und zweiten Fixiermittel (einschließlich dieser Fixiermittel) um einen Winkel dreht, der maximal 179° ist. Hierdurch kann eine weitere Verkürzung des Faserkabels erreicht werden, was insbesondere bei grossen Laserleistungen im Bereich ab 10 kW äusserst vorteilhaft ist.

In einer bevorzugten Ausführungsform der erfindungsgemäßen Laserbearbeitungsmaschine ist das Faserkabel in der vorgegebenen Führungsebene mit einer maximalen Umlenkung von 120°, insbesondere von 100°, zwischen dem ersten und zweiten Fixiermittel geführt. Mit anderen Worten dreht sich die Erstreckungsrichtung des Faserkabels ausgehend von jedem beliebigen Punkt des Faserkabels zwischen dem ersten und zweiten Fixiermittel (einschließlich dieser Fixiermittel) entlang des Wegs des Faserkabels zu jedem beliebigen anderen Punkt zwischen dem ersten und zweiten Fixiermittel (einschließlich dieser Fixiermittel) um einen Winkel, der bei maximal 120° bzw. bei maximal 100° bzw. bei maximal 90° liegt. Hierdurch kann eine weitere Verkürzung des Faserkabels erreicht werden.

In einer weiteren bevorzugten Ausführungsform ist mit dem ersten und zweiten Fixiermittel ausschließlich das Faserkabel fixiert. Hierdurch wird vermieden, dass andere Leitungen das Faserkabel entlang seiner Erstreckung zwischen dem ersten und zweiten Fixiermittel stören.

In einer weiteren bevorzugten Ausgestaltung verläuft in der Betriebsposition der Laserbearbeitungsmaschine, d.h. bei einem bestimmungsgemäßen Aufbau der Maschine für deren Betrieb, das Faserkabel am Ort des ersten Fixiermittels im Wesentlichen in vertikaler Richtung und/oder am Ort des zweiten Fixiermittels im Wesentlichen in horizontaler Richtung. Hierdurch kann eine besonders platzsparende Führung des Faserkabels zwischen dem verfahrbaren Wagen und der Bearbeitungseinheit erreicht werden.

In einer weiteren bevorzugten Ausgestaltung erstreckt sich die vorgegebene Führungsebene senkrecht zu der Brücke bzw. zu deren Längserstreckung.

Die Bewegung des Faserkabels in der vorgegebenen Führungsebene kann je nach Ausgestaltung auf verschiedene Weise erreicht werden. Beispielsweise kann das Faserkabel eine hinreichende Steifigkeit aufweisen, so dass die Bewegung des Faserkabels in der vorgegebenen Führungsebene durch das Faserkabel selbst gewährleistet wird. Alternativ oder zusätzlich sind in einer bevorzugten Variante die vorgegebene Führungsebene definierende Führungsmittel vorgesehen, um eine Bewegung des Faserkabels in einer senkrecht zur vorgegebenen Führungsebene verlaufenden Richtung zu beschränken.

Die Führungsmittel gemäß der obigen Ausführungsform umfassen in einer bevorzugten Variante zumindest zwei parallel verlaufende Anschlagselemente für das Faserkabel. Vorzugsweise ist dabei zumindest ein Anschlagselement durch einen Wandabschnitt gebildet. Alternativ oder zusätzlich kann zumindest ein Anschlagselement auch durch einen oder mehrere Stäbe und/oder Drähte gebildet sein.

Das erste bzw. zweite Fixiermittel können auf beliebige Weise eine starre Befestigung des Faserkabels an der Bearbeitungseinheit bzw. am verfahrbaren Wagen gewährleisten. In einer bevorzugten Ausführungsform weisen das erste Fixiermittel und/oder das zweite Fixiermittel jeweils eine Klemmeinrichtung zum Verklemmen des Faserkabels an der entsprechenden Fixierposition auf.

In einer weiteren bevorzugten Ausführungsform ist eine an sich bekannte Energiekette, die auch als Energieführungskette bzw. Schleppkette bezeichnet wird, zwischen dem verfahrbaren Wagen und der Bearbeitungseinheit vorgesehen. In dieser Energiekette werden andere Leitungen als das Faserkabel vom verfahrbaren Wagen zur Bearbeitungseinheit geführt. Diese Leitungen umfassen für den Betrieb der Bearbeitungseinheit bzw. des Bearbeitungskopfs benötigte Leitungen, wie z.B. einen oder mehrere Schläuche zur Zuführung von Druckluft bzw. von zur Laserbearbeitung benötigtem Gas (beispielsweise Stickstoff und/oder Sauerstoff) und/oder eine oder mehrere Leitungen zur Zuführung von Kühlmittel bzw. Wasser und/oder ein oder mehrere Signalkabel und/oder ein oder mehrere Stromkabel.

Da in der Energiekette der soeben beschriebenen Ausführungsform kein Faserkabel mit einem großen minimalen Biegeradius enthalten ist, kann die Energiekette deutlich kleinere Biegeradien aufweisen, wodurch ein wesentlich kompakterer Aufbau ermöglicht wird. Vorzugsweise ist die Energiekette derart angeordnet, dass sie sich in der Betriebsposition der Laserbearbeitungsmaschine vom verfahrbaren Wagen aus in vertikaler Richtung nach oben erstreckt, anschließend um 180° umgelenkt wird und sich dann in die Bearbeitungseinheit in vertikaler Richtung nach unten erstreckt.

In einer weiteren, besonders bevorzugten Ausführungsform ist in der Betriebsposition der Laserbearbeitungsmaschine der Wagen an der Brücke verfahrbar geführt, wobei die Brücke senkrecht zum Wagen verfahrbar ist. Hierdurch wird eine sehr flexible Anordnung der Bearbeitungseinheit in Bezug auf das zu bearbeitende Werkstück ermöglicht. Vorzugsweise ist der verfahrbare Wagen entlang der Brücke in horizontaler Richtung verfahrbar und die Brücke ist senkrecht zu dem Verfahrweg des Wagens ebenfalls in horizontaler Richtung verfahrbar.

Neben der erfindungsgemäßen Laserbearbeitungsmaschine betrifft die Erfindung eine Bearbeitungseinrichtung für eine solche Laserbearbeitungsmaschine. Diese Bearbeitungseinrichtung ist zur Führung an einer Brücke eingerichtet und enthält einen verfahrbaren Wagen, d.h. einen Wagen, der zum Verfahren auf der Brücke eingerichtet ist. Auf dem Wagen ist eine Bearbeitungseinheit angeordnet, die einen Bearbeitungskopf aufweist, welcher derart ausgestaltet ist, dass er bei Verwendung der Bearbeitungseinrichtung in der Laserbearbeitungsmaschine einen Laserstrahl aus Laserlicht auf ein zu bearbeitendes Werkstück richtet, wobei an dem Bearbeitungskopf ein flexibles Faserkabel zur Zuführung des Laserlichts von einer Laserlichtquelle angeschlossen ist und die Bearbeitungseinheit zusammen mit dem Bearbeitungskopf relativ zu dem verfahrbaren Wagen linear bewegbar ist.

Die erfindungsgemäße Bearbeitungseinrichtung zeichnet sich dadurch aus, dass das Faserkabel an der Bearbeitungseinheit mit einem ersten Fixiermittel und an dem verfahrbaren Wagen mit einem zweiten Fixiermittel fixiert ist, wobei das Faserkabel zum Ermöglichen einer linearen Bewegung der Bearbeitungseinheit relativ zum verfahrbaren Wagen in einer zwischen dem ersten und zweiten Fixiermittel vorgegebenen Führungsebene frei beweglich ist.

Die erfindungsgemäße Bearbeitungseinrichtung ist somit dazu eingerichtet, als eine Bearbeitungseinrichtung für die erfindungsgemäße Laserbearbeitungsmaschine zu arbeiten. In einer bevorzugten Ausgestaltung ist diese Bearbeitungseinrichtung auch dazu eingerichtet, als eine Bearbeitungseinrichtung für eine Laserbearbeitungsmaschine gemäß einer oder mehrerer der oben beschriebenen bevorzugten Ausführungsformen der Laserbearbeitungsmaschine zu arbeiten. Mit anderen Worten können Merkmale der oben beschriebenen bevorzugten Ausführungsformen der Laserbearbeitungsmaschine in der Bearbeitungseinrichtung realisiert sein, sofern die Merkmale die Bearbeitungseinrichtung betreffen.

Ein Ausführungsbeispiel der Erfindung wird nachfolgend anhand der beigefügten Figuren detailliert beschrieben.

Es zeigen:
- Fig. 1: eine schematische perspektivische Darstellung einer Bearbeitungseinrichtung, die in einer Ausführungsform der erfindungsgemäßen Laserbearbeitungsmaschine verbaut ist, wobei sich der Bearbeitungskopf in einer ersten vertikalen Position befindet;
- Fig. 2: eine Darstellung analog zu Fig. 1, wobei sich der Bearbeitungskopf in einer zweiten vertikalen Position befindet, die niedriger als die erste vertikale Position aus Fig. 1 ist; und
- Fig. 3: eine schematische perspektivische Gesamtansicht der Laserbearbeitungsmaschine, in welcher die Bearbeitungseinrichtung aus Fig. 1 und Fig. 2 verbaut ist.

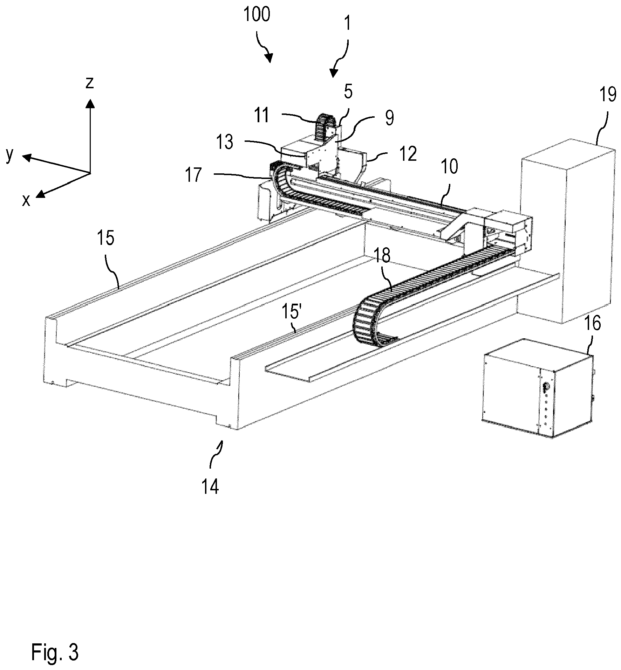

Nachfolgend wird eine Variante der Erfindung anhand einer Laserbearbeitungsmaschine 100 in der Form einer Laserschneidmaschine beschrieben, deren Gesamtaufbau aus Fig. 3 ersichtlich ist. Die Laserbearbeitungsmaschine dient zum Schneiden von Blechen unter Verwendung einer Bearbeitungseinrichtung, über welche ein hochenergetischer Laserstrahl auf die Bleche gerichtet wird.

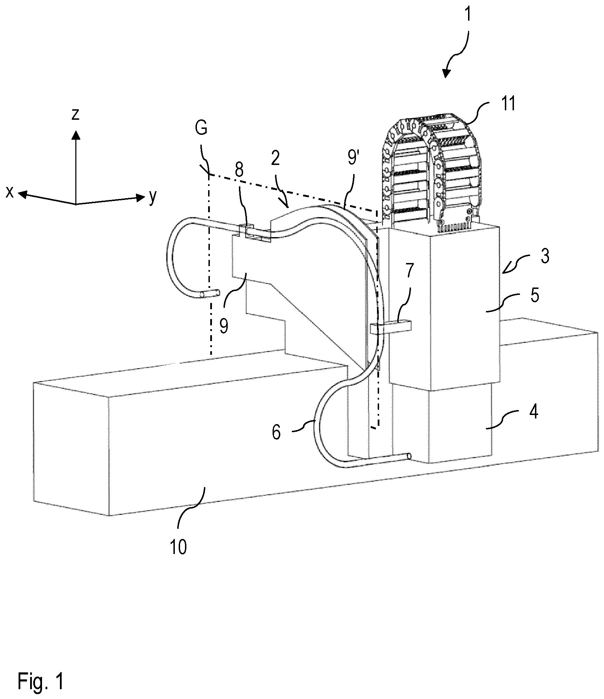

Fig. 1 zeigt im Detail die Bearbeitungseinrichtung, die insgesamt mit Bezugszeichen 1 bezeichnet. Diese Einrichtung umfasst einen verfahrbaren Wagen 2, der in der hier beschriebenen Ausführungsform als Quer- bzw. Schneidwagen ausgestaltet ist und eine Bearbeitungseinheit 3 trägt. Entsprechend dem in Fig. 1 gezeigten kartesischen Koordinatensystem ist die Bearbeitungseinheit 3 in vertikaler z-Richtung relativ zum Wagen 2 mittels einer (nicht gezeigten) Aktorik bewegbar, wie weiter unten noch erläutert wird. Der Wagen 2 ist auf einer Brücke 10 angeordnet, die in der hier beschriebenen Ausführungsform eine Schneidbrücke darstellt und von der in der Ansicht der Fig. 1 nur ein Teilabschnitt dargestellt ist. Entlang dieser Brücke ist der Wagen 2 mittels einer (nicht gezeigten) Aktorik in der horizontalen y-Richtung gemäß dem dargestellten Koordinatensystem verfahrbar.

Wie sich aus der Gesamtansicht der Laserbearbeitungsmaschine gemäß Fig. 3 ergibt, ist auch die Brücke 10 verfahrbar, und zwar in der horizontalen x-Richtung des dargestellten Koordinatensystems, d.h. senkrecht zu dem Verfahrweg des Wagens 2. Hierfür ist die Brücke auf einem Rahmen 14 mit zwei sich in y-Richtung erstreckenden Trägern 15 und 15' angeordnet. Die Brücke liegt auf diesen Trägern auf und kann entlang deren Längsrichtung mit geeigneter (nicht dargestellter) Aktorik verfahren werden.

Gemäß Fig. 1 umfasst die Bearbeitungseinheit 3 einen Bearbeitungskopf 4, der in der hier beschriebenen Ausführungsform als Schneidkopf ausgestaltet ist und an dem ein Faserkabel 6 angeschlossen, über das dem Bearbeitungskopf Laserlicht zugeführt wird. Das Laserlicht stammt von einer Laserlichtquelle, die in Fig. 3 mit Bezugszeichen 16 bezeichnet ist. In dem Bearbeitungskopf 4 befindet sich eine Optik, die aus dem Laserlicht, das über das Faserkabel 6 in den Bearbeitungskopf 4 geleitet wird, einen Laserstrahl erzeugt, der nach unten gerichtet wird. Unterhalb des Bearbeitungskopfs befindet sich im Betrieb der Laserbearbeitungsmaschine das (nicht gezeigte) zu schneidende Blech, das gemäß der Darstellung der Fig. 3 zwischen den Trägern 15 und 15' des Rahmens 14 positioniert ist.

Neben dem Faserkabel 6 werden dem Bearbeitungskopf 4 in an sich bekannter Weise weitere Leitungen zugeführt, die für seinen Betrieb benötigt werden. Diese Leitungen, die aus Übersichtlichkeitsgründen nicht dargestellt sind, umfassen u.a. elektrische Leitungen zur Stromversorgung, Steuerkabel sowie Schläuche zur Zuführung von Druckluft und von für den Schneidvorgang benötigtem Gas. Die Leitungen werden dabei separat zum Faserkabel 6 über eine an sich bekannte Energiekette 11 vom Wagen 2 zum Bearbeitungskopf 4 geführt.

Die Energiekette 11 erstreckt sich in z-Richtung nach oben und wird auch als Z-Schlepp bezeichnet. In dieser Kette werden die oben beschriebenen Leitungen über eine Vielzahl von flexiblen Gliedern geführt. Die Leitungen laufen dabei ausgehend vom Wagen 2 in vertikaler Richtung nach oben in den Z-Schlepp hinein, der die Leitungen um 180° umlenkt und anschließend in vertikaler Richtung nach unten in ein Gehäuse 5 der Bearbeitungseinheit 3 führt, das oberhalb des Bearbeitungskopfs 4 liegt. Die Energiekette 11 ermöglicht eine Verschiebung der darin geführten Leitungen über die Veränderung ihrer Biegeposition, wenn sich der Bearbeitungskopf 4 bzw. die Bearbeitungseinheit 3 relativ zum Wagen 2 bewegt.

Im Unterschied zu der hier beschriebenen Ausführungsform wird in herkömmlichen Bearbeitungseinrichtungen das Faserkabel 6 zusammen mit den weiteren Leitungen über die Energiekette 11 dem Bearbeitungskopf 4 zugeführt. Hierbei ist es nachteilhaft, dass das Faserkabel in der Regel einen deutlich größeren minimalen Biegeradius als die weiteren in der Energiekette geführten Leitungen hat. Demzufolge muss der Biegeradius der Energiekette 11 auf den relativ großen minimalen Biegeradius des Faserkabels eingestellt werden, was die vertikale Ausdehnung der Energiekette vergrößert. Ein üblicherweise vorgesehenes Maschinendach muss somit in größerer Höhe angeordnet werden, was erhöhte Kosten nach sich zieht. Darüber hinaus resultiert die Führung des Faserkabels in dem Z-Schlepp in einer größeren Länge dieses Kabels. Da zum ordnungsgemäßen Betrieb des Bearbeitungskopfs 4 bestimmte Faserkabellängen nicht überschritten werden dürfen, wird der Gestaltungsspielraum bei der Verlegung des Faserkabels und entsprechend die Positionierung der Laserquelle - wegen der limitierten Faserlänge für die Übertragung von Laserlicht mit hoher Leistung - eingeschränkt. Darüber hinaus führen längere Faserkabel zu erhöhten Herstellungskosten. Aufgrund der Abwesenheit der Faser im Z-Schlepp kann dieser wie oben beschrieben kleiner realisiert werden, was zu einer Verkürzung aller darin geführten Kabel und/oder Schläuche führt. So können weitere Kosten eingespart werden.

Um die obigen Probleme zu beseitigen, wird in der hier beschriebenen Ausführungsform das Faserkabel 6 separat vom Z-Schlepp 11 hin zum Bearbeitungskopf 4 geführt. Ausgehend von dem Bearbeitungskopf 4 läuft das Faserkabel zunächst in horizontaler y-Richtung aus dem Bearbeitungskopf 4 heraus und wird dann um 180° gebogen, bevor es an dem Gehäuse 5 der Bearbeitungseinheit 3 mittels eines ersten Fixiermittels 7, das lediglich schematisch angedeutet ist, starr fixiert wird. Als Fixiermittel 7 kann ein an sich bekanntes Befestigungselement verwendet werden, z.B. kann eine Klemmeinrichtung vorgesehen sein. Anschließend wird das Kabel von dem ersten Fixiermittel 7 hin zu einem zweiten Fixiermittel 8 geführt, das ebenfalls nur schematisch angedeutet ist und beispielsweise wiederum durch eine Klemmeinrichtung realisiert sein kann. Das zweite Fixiermittel 8 ist am Wagen 2 vorgesehen und gewährleistet somit die starre Befestigung des Faserkabels am Wagen.

Ein wesentliches Merkmal der Bearbeitungseinrichtung der Fig. 1 besteht darin, dass das Faserkabel 6 zwischen dem ersten Fixiermittel 7 und dem zweiten Fixiermittel 8 ohne weitere Fixierung und insbesondere ohne Energiekette in einer Führungsebene G parallel zur x-z-Ebene des dargestellten Koordinatensystems frei bewegbar ist. Auf diese Weise wird eine Bewegung des Faserkabels bei der vertikalen Verschiebung der Bearbeitungseinheit 3 relativ zum Wagen 2 ermöglicht. Um jedoch eine unerwünschte Bewegung des Faserkabels bei einem schnellen Verfahren des Wagens 2 in y-Richtung zu vermeiden, ist die Bewegung des Faserkabels zwischen den Fixiermitteln 7 und 8 mit Hilfe von Führungsmitteln 9 und 9' beschränkt, die in der hier beschriebenen Ausführungsform zwei parallele Wandabschnitte darstellen. Die Führungsmittel bilden Anschlagselemente, zwischen denen sich das Faserkabel von dem Fixiermittel 7 zum Fixiermittel 8 erstreckt. Die Führungsmittel sind Teil des Wagens 2 und verlaufen parallel zueinander in Ebenen, die wiederum parallel zu der x-z-Ebene des dargestellten Koordinatensystems sind. Das Fixiermittel 8 befindet sich im hinteren Bereich einer oberen Kante des Führungsmittels 9.

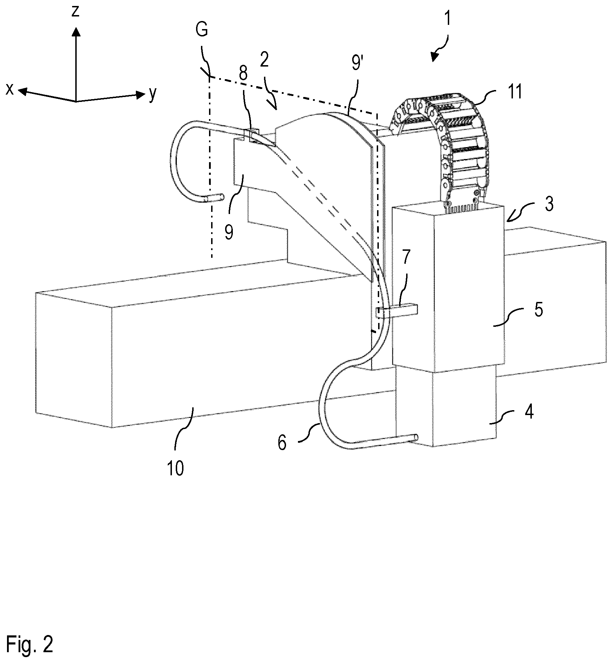

Zum Schutz des Faserkabels 6 ist ferner eine Verkleidung links neben dem Bearbeitungskopf 4 und dem Gehäuse 5 vorgesehen. Diese Verkleidung deckt einen Teil des Faserkabels auf seinem Weg vom Bearbeitungskopf 4 zu den Führungsmitteln 9 und 9' ab. Die Verkleidung ist aus der Fig. 3 ersichtlich und dort mit Bezugszeichen 12 bezeichnet. Um die Kabelführung sichtbar zu machen, wurde die Verkleidung in der Darstellung der Fig. 1 und Fig. 2 weggelassen.

In Fig. 1 ist die Bearbeitungseinheit 3 bzw. der Bearbeitungskopf 4 in einer ersten oberen vertikalen Position relativ zum Wagen 2 angeordnet. Während des Schneidprozesses bzw. des Emittierens von Laserlicht mittels des Bearbeitungskopfs wird die Bearbeitungseinheit 3 zusammen mit dem Bearbeitungskopf 4 nach unten in eine zweite, tiefer liegende vertikale Position bewegt, die in Fig. 2 angedeutet ist. Wie man in dieser Figur erkennt, befindet sich der Bearbeitungskopf 4 nunmehr unterhalb der Brücke 10, was in der Position der Fig. 1 nicht der Fall ist. Die vertikale Bewegung der Bearbeitungseinheit 3 wird mit einer geeigneten Aktorik und Vertikalführung der Bearbeitungseinheit am Wagen 4 ermöglicht.

Die vertikale Bewegung der Bearbeitungseinheit 3 in die Position der Fig. 2 führt zu einer Verschiebung des ersten Fixiermittels 7 nach unten, was wiederum zu einer Streckung des Faserkabels 6 zwischen den beiden Fixiermitteln 7 und 8 führt. Durch die freie Bewegung des Faserkabels zwischen den Fixiermitteln kann somit eine Kompensation der Veränderung des Abstands zwischen den beiden Fixiermitteln erreicht werden. Die Streckung des Faserkabels 6 zwischen den Führungsmitteln 9 und 9' ist in Fig. 2 durch eine gestrichelte Wiedergabe des Kabels verdeutlicht.

Gemäß der Ausführungsform der Fig. 1 und Fig. 2 fixieren die Fixiermittel 7 und 8 das Faserkabel 6 derart, dass es am Ort des Fixiermittels 8 in horizontaler Richtung und am Ort des Fixiermittels 7 in vertikaler Richtung verläuft. Auf diese Weise wird erreicht, dass das Faserkabel 6 um einen Winkel umgelenkt wird, der deutlich kleiner als 180° ist. Mit anderen Worten dreht sich die Erstreckungsrichtung des Faserkabels 6 ausgehend von jedem beliebigen Punkt des Faserkabels zwischen den Fixiermitteln 7 und 8 entlang des Wegs des Faserkabels zu jedem beliebigen anderen Punkt zwischen den Fixiermitteln 7 und 8 um einen Winkel, der deutlich kleiner als 180° ist. Auf diese Weise wird eine kurze Kabelführung zwischen Wagen 2 und Bearbeitungskopf 4 ermöglicht.

Fig. 3 zeigt in schematischer Darstellung nochmals den Gesamtaufbau der Laserbearbeitungsmaschine 100, welche die oben beschriebene Bearbeitungseinrichtung 1 enthält. In der Darstellung der Fig. 3 ist die Laserbearbeitungsmaschine aus einer Perspektive gezeigt, welche die Kabelführung entlang der Brücke 10 und des Rahmens 14 verdeutlicht. Aus dieser Perspektive ist die Bearbeitungseinrichtung 1 hinter der Brücke 10 positioniert und teilweise durch diese verdeckt. Demzufolge ist aus Fig. 3 nicht der Bearbeitungskopf 4 ersichtlich, der sich hinter der Brücke 10 befindet. Man erkennt jedoch einen Teil des Gehäuses 5 sowie den Z-Schlepp 11 und das Führungsmittel bzw. den Wandabschnitt 9, durch den die Bewegung des Faserkabels begrenzt wird. Darüber hinaus ist die Verkleidung 12 ersichtlich, in der sich ein Teil des Faserkabels befindet. Zwecks klarerer Darstellung sind in Fig. 3 weder das Faserkabel noch andere Leitungen wiedergegeben.

Gemäß Fig. 3 verlässt das Faserkabel den Wagen 2 über einen Schlitz 13 hinter dem Fixiermittel 8, das in Fig. 3 nicht dargestellt ist. Anschließend wird das Faserkabel so gebogen, dass es in eine Energiekette 17 eintritt, die sich in horizontaler y-Richtung erstreckt und auch als Y-Schlepp bezeichnet wird. Innerhalb dieser Energiekette werden in an sich bekannter Weise auch die weiteren Leitungen geführt, die über den Z-Schlepp 11 zum Bearbeitungskopf 4 gelangen. Die Energiekette 17 gewährleistet die Nachführung der darin aufgenommenen Leitungen bzw. Kabel beim Verfahren des Wagens 2. Von dem Y-Schlepp gelangen die Kabel über an sich bekannte Kabelkanäle, die hier nicht näher erläutert werden, zu einer weiteren Energiekette 18, die auch als X-Schlepp bezeichnet wird und die Nachführung der darin enthaltenen Kabel bei Verfahren der Brücke 10 in die x-Richtung gewährleistet. Nach Verlassen des X-Schlepps werden die Kabel entsprechend ihrer Funktion entweder zu einem Schaltschrank 19 zur Steuerung der Laserbearbeitungsmaschine oder zu der bereits oben erwähnten Laserlichtquelle 16 geführt. Diese Kabelführung ist in Fig. 3 nicht wiedergegeben und für die Erfindung auch nicht weiter relevant.

Die im Vorangegangenen beschriebene Ausführungsform der Erfindung weist eine Reihe von Vorteilen auf. Insbesondere wird durch eine separate Führung des Faserkabels hin zum Bearbeitungskopf der Tatsache Rechnung getragen, dass der minimale Biegeradius des Faserkabels deutlich größer ist als der minimale Biegeradius anderer Leitungen, die über einen Z-Schlepp zum Bearbeitungskopf gelangen. Demzufolge kann die vertikale Höhe des Z-Schlepps durch Verringerung seines Biegeradius vermindert werden, wenn dieser Schlepp kein Faserkabel führt. Darüber hinaus kann durch eine geeignete Fixierung des Faserkabels an zwei Fixierpunkten an der Bearbeitungseinheit bzw. am Wagen eine Umlenkung des Kabels um weniger als 180° erreicht werden, wodurch geringere Kabellängen ermöglicht werden. Dies führt wiederum zu geringeren Kosten sowie einem höheren Gestaltungsspielraum bei der Kabelführung und der Positionierung der Laserquelle.

### Bezugszeichenliste

- 100: Laserbearbeitungsmaschine
- 1: Bearbeitungseinrichtung
- 2: verfahrbarer Wagen
- 3: Bearbeitungseinheit
- 4: Bearbeitungskopf
- 5: Gehäuse
- 6: Faserkabel
- 7: erstes Fixiermittel
- 8: zweites Fixiermittel
- 9, 9': Führungsmittel
- 10: Brücke
- 11: Z-Schlepp
- 12: Verkleidung
- 13: Schlitz
- 14: Rahmen
- 15, 15': Träger des Rahmens
- 16: Laserlichtquelle
- 17: Y-Schlepp
- 18: X-Schlepp
- 19: Schaltschrank
- G: Führungsebene

## Patentansprüche

1. Laserbearbeitungsmaschine, insbesondere Laserschneidmaschine, umfassend eine an einer Brücke (10) geführte Bearbeitungseinrichtung (1) mit einem verfahrbaren Wagen (2), auf dem eine Bearbeitungseinheit (3) angeordnet ist, die einen Bearbeitungskopf (4) aufweist, welcher derart ausgestaltet ist, dass er einen Laserstrahl aus Laserlicht auf ein zu bearbeitendes Werkstück richtet, wobei an dem Bearbeitungskopf (4) ein flexibles Faserkabel (6) zur Zuführung des Laserlichts von einer Laserlichtquelle (16) angeschlossen ist und die Bearbeitungseinheit (3) zusammen mit dem Bearbeitungskopf (4) relativ zu dem verfahrbaren Wagen (2) linear bewegbar ist,
**dadurch gekennzeichnet, dass**
das Faserkabel (6) an der Bearbeitungseinheit (3) mit einem ersten Fixiermittel (7) und an dem verfahrbaren Wagen (2) mit einem zweiten Fixiermittel (8) fixiert ist, wobei das Faserkabel (6) zum Ermöglichen einer linearen Bewegung der Bearbeitungseinheit (3) relativ zum verfahrbaren Wagen (2) in einer zwischen dem ersten und zweiten Fixiermittel (7, 8) vorgegebenen Führungsebene (G) frei beweglich ist.

2. Laserbearbeitungsmaschine nach Anspruch 1, **dadurch gekennzeichnet, dass** das Faserkabel (6) in der vorgegebenen Führungsebene (G) mit einer maximalen Umlenkung von 179° zwischen dem ersten und zweiten Fixiermittel (7, 8) geführt ist.

3. Laserbearbeitungsmaschine nach Anspruch 2, **dadurch gekennzeichnet, dass** das Faserkabel (6) in der vorgegebenen Führungsebene (G) mit einer maximalen Umlenkung von 120°, insbesondere von 100°, zwischen dem ersten und zweiten Fixiermittel (7, 8) geführt ist.

4. Laserbearbeitungsmaschine nach einem der vorhergehenden Ansprüche, **dadurch gekennzeichnet, dass** mit dem ersten und zweiten Fixiermittel (7, 8) ausschließlich das Faserkabel (6) fixiert ist.

5. Laserbearbeitungsmaschine nach einem der vorehrgehenden Ansprüche, **dadurch gekennzeichnet, dass** in der Betriebsposition der Laserbearbeitungsmaschine (100) das Faserkabel (6) am Ort des ersten Fixiermittels (7) im Wesentlichen in vertikaler Richtung verläuft und/oder am Ort des zweiten Fixiermittels (8) im Wesentlichen in horizontaler Richtung verläuft.

6. Laserbearbeitungsmaschine nach einem der vorhergehenden Ansprüche, **dadurch gekennzeichnet, dass** sich die vorgegebene Führungsebene (G) senkrecht zu der Brücke (10) erstreckt.

7. Laserbearbeitungsmaschine nach einem der vorhergehenden Ansprüche, **dadurch gekennzeichnet, dass** die vorgegebene Führungsebene (G) definierende Führungsmittel (9, 9') vorgesehen sind, um eine Bewegung des Faserkabels (6) in einer senkrecht zur vorgegebenen Führungsebene (G) verlaufenden Richtung zu beschränken.

8. Laserbearbeitungsmaschine nach Anspruch 7, **dadurch gekennzeichnet, dass** die Führungsmittel (9, 9') zumindest zwei parallel verlaufende Anschlagselemente für das Faserkabel (6) umfassen.

9. Laserbearbeitungsmaschine nach Anspruch 8, **dadurch gekennzeichnet, dass** zumindest ein Anschlagselement durch einen Wandabschnitt gebildet ist und/oder zumindest ein Anschlagselement durch einen oder mehrere Stäbe und/oder Drähte gebildet ist.

10. Laserbearbeitungsmaschine nach einem der vorhergehenden Ansprüche, **dadurch gekennzeichnet, dass** das erste Fixiermittel (7) und/oder das zweite Fixiermittel (8) jeweils eine Klemmeinrichtung zum Verklemmen des Faserkabels (6) aufweisen.

11. Laserbearbeitungsmaschine nach einem der vorhergehenden Ansprüche, **dadurch gekennzeichnet, dass** eine Energiekette (11) zwischen dem verfahrbaren Wagen (2) und der Bearbeitungseinheit (3) vorgesehen ist, wobei in der Energiekette (11) andere Leitungen als das Faserkabel (6) vom verfahrbaren Wagen (2) zur Bearbeitungseinheit (3) geführt werden.

12. Laserbearbeitungsmaschine nach einem der vorhergehenden Ansprüche, **dadurch gekennzeichnet, dass** der Wagen (2) an der Brücke (10) verfahrbar geführt ist, wobei die Brücke (10) senkrecht zum Wagen (2) verfahrbar ist.

13. Bearbeitungseinrichtung für eine Laserbearbeitungsmaschine, wobei die Bearbeitungseinrichtung (1) zur Führung an einer Brücke (10) eingerichtet ist und einen verfahrbaren Wagen (2) enthält, auf dem eine Bearbeitungseinheit (3) angeordnet ist, die einen Bearbeitungskopf (4) aufweist, welcher derart ausgestaltet ist, dass er bei Verwendung der Bearbeitungseinrichtung (1) in der Laserbearbeitungsmaschine (100) einen Laserstrahl aus Laserlicht auf ein zu bearbeitendes Werkstück richtet, wobei an dem Bearbeitungskopf (1) ein flexibles Faserkabel (6) zur Zuführung des Laserlichts von einer Laserlichtquelle (16) angeschlossen ist und die Bearbeitungseinheit (3) zusammen mit dem Bearbeitungskopf (4) relativ zu dem verfahrbaren Wagen (2) linear bewegbar ist,
**dadurch gekennzeichnet, dass**
das Faserkabel (6) an der Bearbeitungseinheit (3) mit einem ersten Fixiermittel (7) und an dem verfahrbaren Wagen (2) mit einem zweiten Fixiermittel (8) fixiert ist, dass das Faserkabel (6) zum Ermöglichen einer linearen Bewegung der Bearbeitungseinheit (3) relativ zum verfahrbaren Wagen (2) in einer zwischen dem ersten und zweiten Fixiermittel (7, 8) vorgegebenen Führungsebene (G) frei beweglich ist.

14. Bearbeitungseinrichtung nach Anspruch 13, **dadurch gekennzeichnet, dass** die Bearbeitungseinrichtung (1) dazu eingerichtet ist, als eine Bearbeitungseinrichtung (1) für eine Laserbearbeitungsmaschine (100) nach einem der Ansprüche 2 bis 11 zu arbeiten.
